# EUROPÄISCHE PATENTSCHRIFT

(11) **EP 0 781 400 B1**
(45) Veröffentlichungstag und Bekanntmachung des Hinweises auf die Patenterteilung: **09.03.2011**
(21) Anmeldenummer: 96920694.5
(22) Anmeldetag: 21.06.1996
(51) Int. Cl.: G01F 11/02, G01F 11/08, F04B 43/09

(54) **ELEKTROMAGNETISCHE DOSIERVORRICHTUNG MIT AUSSENLIEGENDEM ANKER**
ELECTROMAGNETIC DOSING DEVICE WITH OUTLYING ARMATURE
DOSEUR ELECTROMAGNETIQUE A INDUIT EXTERIEUR

(30) Priorität: 23.06.1995 DE 19522943
(43) Veröffentlichungstag der Anmeldung: 02.07.1997
(73) Patentinhaber: Sara Lee/DE N.V., 3532 AA Utrecht (NL)
(72) Erfinder: Van Zijverden, Willem, 23627 Gross Grönau (DE)
(74) Vertreter: Prins, Adrianus Willem
(86) Internationale Anmeldenummer: PCT/DE1996/001100
(87) Internationale Veröffentlichungsnummer: WO 1997/001081

(56) Entgegenhaltungen:
- EP-A- 0 345 210
- FR-A- 2 502 774

## Beschreibung

Die Erfindung betrifft eine elektromagnetisch betätigbare Pump- und Dosiervorrichtung für die volumengenaue Dosierung von Fluiden verschiedener Viskosität mit einem zweiteiligen, in Axialrichtung - die gleichzeitig die Durchströmrichtung vorgibt - langgestreckten, den Zu-(9) und Abfluss (10) einer dazwischen angeordneten Pumpkammer (11a) bildenden Dosiergehäuse (9,10), wobei die Pumpkammer (11a) in der Durchströmrichtung zwischen einem Einlass- und einem Auslass-Rückschlagventil (7, 8; 22, 23; 36, 37) begrenzt ist, von denen das eine in Axialrichtung unbeweglich angeordnet ist und das andere demgegenüber mittels eines von der elektromagnetischen Betätigungseinrichtung (1, 1a, 1b) axial verstellbaren Ankers (5) beweglich ist, wobei der Anker (5) mit dem beweglichen Rückschlagventil (8; 22; 37) mechanisch zu einer Bewegungseinheit gekoppelt (19;20;21;34;61) ist und der Anker (5) von einem aus mindestens einem nicht magnetisierbaren Luftspalt (3,3a,3b,3c) der Betätigungseinrichtung heraus inhomogen gebildeten Kraftfeld (H₁(x), H₂(x), H₃(x), H₄(x) in seiner Lage beeinflusst wird.

Die Dosierung einer vorbestimmten Fluid- oder Produktmenge erfolgt dabei durch eine größere Anzahl von zyklischen Pumpstößen aus einer Pumpkammer. Mit dem kleinen Dosiervolumen pro Zyklus wird erreicht, dass ein (fast) kontinuierlicher Fluidstrom entsteht, der sich (fast) synchron mit Wasser zu einem Getränk mischen lässt. Ausserdem ist dadurch eine feinstufige Justage der abgegebenen Dosis und damit des Mischungsverhältnisses möglich. Die Dosiervorrichtung kann kompakt und kostengünstig hergestellt werden.

Bei der bekannten Vorrichtung ist eine durch einen hohlzylindrischen Körper gebildete Pumpkammer vorgesehen, die an beiden Seiten durch einen Einlassventilkörper beziehungsweise einen Auslassventilkörper begrenzt wird. Die Pump- und Dosiervorrichtung ist weiter mit einem Anker versehen, der fest mit dem Einlassventilkörper verbunden ist, um mit Hilfe eines elektromagnetischen Feldes den Einlassventilkörper auf- und niederbewegen zu lassen. Der Anker befindet sich innerhalb eines Gehäuses der Pump- und Dosiervorrichtung, das alles derart, dass der Anker, im Gebrauch, mit dem Fluid in Kontakt steht, das mit Hilfe der Pump- und Dosiervorrichtung gepumpt wird.

Es stellt sich heraus, dass die bekannte Pump- und Dosiervorrichtung nur geeignet ist, um in genauer Weise die Flüssigkeit zu dosieren, wenn diese Flüssigkeit eine verhältnismäßig geringe Viskosität hat. Außerdem stellt es sich heraus, dass die Dosierung des Volumens abhängig von der Temperatur des Fluids ist.

Es ist Aufgabe der Erfindung, die Leistung und Einsatzmöglichkeiten einer Dosiervorrichtung deutlich zu erweitern und gleichwohl weiterhin eine volumengenaue Dosierung zu ermöglichen.

Diese Aufgabe wird gemäß Anspruch 1 oder Anspruch 10 gelöst.

Mit der Erfindung wird es möglich, die von der elektromagnetischen Betätigungseinrichtung auf das bewegliche Element der Pumpe übertragene Kraft wesentlich zu vergrößern, indem der ferromagnetische Anker dem - aus dem Luftspalt inhomogen hervortretenden - magnetischen Kraftfeld deutlich näher gebracht wird (Anspruch 1). Das Kraftfeld H(x) wird zunächst auf den dem Luftspalt eng benachbarten Anker übertragen, danach erst in rein mechanischer Kopplung in die Pumpkammer, aus der der Förderdruck aufgebaut wird (Anspruch 10). Die magnetische Kopplung wird zum Beispiel enger (direkter) als die mechanische Kopplung.

Dabei kann der außenliegende Anker wesentlich größer dimensioniert werden. Weiterhin ist die Materialwahl für den Anker nicht abhängig von den möglichen Einflüssen des Produktes auf das Ankermaterial und umgekehrt, da er nicht mehr vom Konzentrat berührt wird oder in ihm angeordnet wird. So ist es möglich gegenüber einem bisher verwendeten innenliegenden Anker bei gleichbleibender Spule und gleicher Stromstärke die Ankerkraft um den Faktor 4 bis 6 zu vergrößern. Ein weiterer Vorteil liegt darin, dass der Anker auch bei solchen Anordnungen, bei denen die Dosiereinrichtung normalerweise als Einwegeinrichtung dem austauschbaren Konzentrat-Vorratsbehälter zugeordnet ist, der Betätigungseinrichtung zur Mehrfachverwendung zugeordnet werden kann. Durch einfache Schnapp- oder Bajonettverbindungen ("Rastverbindung") wird beim Montieren des Rest-Dosiersystems (der Pumpenkammer) in der Betätigungseinrichtung (dem Pumpenantrieb) die vollständige Pumpe zum stoßweisen Dosieren "erstellt".

Der Anker wird auf diese Weise dauerhaft einem Getränkeautomaten zugeordnet werden, nur die Pumpkammer (mit Ventilen) wird als EinwegEinrichtung am austauschbaren Behälter angeordnet. Kosten können eingespart werden. Die Umwelt wird geschont.

Die im Stand der Technik bislang magnetisch durch die Kunststoffwandung - ohne darin angebrachten Fensterdurchbruch - übertragene Kraft auf Pumpventile wird ersetzt durch eine mechanisch übertragene Antriebskraft. Beispielsweise ein Arm greift durch ein Fenster in der Dosiervorrichtung; es können auch rotationssymmetrisch mehrere Fenster von mehreren Koppelarmen durchgriffen werden. Charakteristisch bleibt die rein mechanische Einkopplung von Hubkraft in das Innere der Pumpkammer.

Die auf das Pumpelement der Dosiervorrichtung übertragene höhere Antriebskraft ermöglicht es, die - die Pumpkammer begrenzenden - Elemente formstabiler zu gestalten, so dass die volumengenaue Dosierung wesentlich verbessert wird, obwohl auch der Pumpdruck durch die bessere (mechanische) Kraftübertragung wesentlich erhöht wird. Der erhöhte Pumpdruck ermöglicht darüber hinaus, die dosierte Produktmenge von der Dosiervorrichtung über längere Transportwege zuverlässig weiterzutransportieren. Vor allem wird durch die höhere Pumpleistung und die hohe Formstabilität der Pumpkammer die Möglichkeit eröffnet, die Dosiervorrichtung für Produkte einzusetzen, die sich in ihrer Viskosität wesentlich unterscheiden; die Dosiereinrichtung der Erfindung behält ihre hohe Genauigkeit auch bei Viskositäten bis zu 500 cP bei.

In der elektromagnetischen Betätigungseinrichtung kann (statt der bisher üblichen zylindrischen) eine seitlich U-förmige MagnetfeldErzeugungseinrichtung verwendet werden (Anspruch 6). Obwohl diese Anordnungen im Stand der Technik hinsichtlich der erreichbaren Pumpkraft weniger vorteilhaft sind, können sie mit der Erfindung vorteilhaft eingesetzt werden: Pumpkraft steht durch die räumliche Nähe von Anker und Elektromagnet (Anspruch 1, Anspruch 10) ausreichend zur Verfügung, so dass ein geringer Verlust nicht so stark zum Tragen kommt, vielmehr die kostengünstige Herstellung des U-Magneten und die von ihm ermöglichte bequemere Befüllung mit Fluiden/Konzentraten (z. B. von vorne statt von oben) in den Vordergrund tritt.

Der außenliegende Anker kann zur sicheren und verschleißfreien Führung direkt in der Innenöffnung der magnetischen Betätigungseinrichtung - sehr dicht bei seinem Luftspalt - geführt sein. Dazu kann deren Wandfläche und/oder auch die äußere Führungsfläche des Ankers entsprechend beschichtet sein. Auch können dazu geeignete dünne Gleiteinsätze verwendet werden.

Die mit dem außenliegenden Anker erzeugbaren Pump- und Förderdrücke liegen in der Größenordnung von 1 bis 4 bar, gegenüber den Drücken von etwa 0 ... 0,5 bar von solchen Ankern, die in der Pumpkammer - als mit der Dosiervorrichtung wegzuwerfendes Teil - angeordnet sind. Die Angabe "hohe Drücke" (Anspruch 10) ist also so zu verstehen, dass damit Förderdrücke spürbar oberhalb von 0,5 bar (Überdruck) gemeint sind. Ebenso ist die enge magnetische Kopplung und die mechanisch längere Kopplung als Gegensatz zur mechanisch engen (kurzen) und magnetisch schlechteren Kopplung (erheblicher Abstand vom Luftspalt) zu verstehen.

Die Möglichkeit, den Stellhub des außenliegenden Ankers mit zwei Kraftfeldern gegensinnig zu steuern (Anspruch 11, 12, 13), kann viele Vorteile bringen, wobei entweder derselbe Anker von zwei in x-Richtung beabstandeten Kraftfeldern hin und her bewegt wird (Anspruch 11) oder aber zwei Anker mit jeweils individueller Magnetkraft gegensinnig bewegt werden (Anspruch 13). Im letzteren Fall sind beide Anker mechanisch über das bewegliche Ventil der Pumpkammer gekoppelt.

Beide Bewegungen können in ihrer Charakteristik unabhängig voneinander optimiert werden. Strompulse können sogar abhängig von dem zu dosierenden Fluid vorgewählt oder vorgegeben sein. Eine Rückstell-Feder ist entbehrlich, wenn die beiden Anker "im Gegentakt-Betrieb" gesteuert werden; sofern doch noch eine solche Feder benötigt wird, sind ihre Eigenschaften unkritisch. Die Volumenhaltigkeit des die Pumpkammer radial dichtenden Balges ist verbesserbar. Die auf Dauer angelegte Reproduzierbarkeit der Volumengenauigkeit wird möglich, da der Stromverlauf und seine Amplitude jederzeit nachstellbar und einstellbar sind, ohne dass Feder oder Balg ausgetauscht oder justiert werden müssen. Die Eigenschaft von Balg/Feder sind für die Volumenhaltigkeit untergeordnet, sieht man von der "radialen Steifigkeit" ab.

Die Erfindung betrifft auch ein Verfahren zum genau dosierten Fördern oder Pumpen von viskosen Fluiden unter hohem Druck, oberhalb von 0,5 Bar (Überdruck), bei dem ein vom Spalt (3a,3b,3c) eines ansteuerbaren Elektromagnets (1;1a) ausgehendes Kraftfeld (H₁, H₂, H₃, H₄) auf mindestens einen dem Spalt (3) angrenzend zugeordneten axialverschieblich gelagerten Anker (5) übertragen wird, der seine Bewegung über eine mechanische Kopplung (19,20,21;34;10) in eine Pumpkammer (11a) überträgt, ohne daß der Anker (5) die viskosen Fluide berührt, aus der Fördervolumen und Förderdruck zyklisch aufgebaut werden.

Die Erfindung(en) werden nachfolgend anhand mehrerer Ausführungsbeispiele erläutert und ergänzt.
- **Figur 1, Figur 2, Figur 3**: sind jeweils unterschiedliche Ausführungsbeispiele der erfindungsgemäßen Dosiervorrichtung im Längsschnitt, wobei unterschiedliche Stellungen des Förderhubes der volumenveränderlichen Pumpkammer in linker und rechter Hälfte der jew. betroffenen Figur veranschaulicht sind. Nur Figur 1 zeigt in beiden Hälften denselben Hub. Einheitlich ist x die Achsrichtung, in der der Hub und Förderrichtung verläuft.
- **Figur 4**: ist eine Ausführungsform mit zwei gegensinnig arbeitenden Spulen, die Kraft auf denselben Anker 5 ausüben.
- **Figur 4a**: ist eine Ausschnittsvergrößerung der lösbaren Rastverbindung 61 zwischen Anker 5 und mechanischer Kopplung 20 zum beweglichen Ventil oder Ventilträger 22/22a.

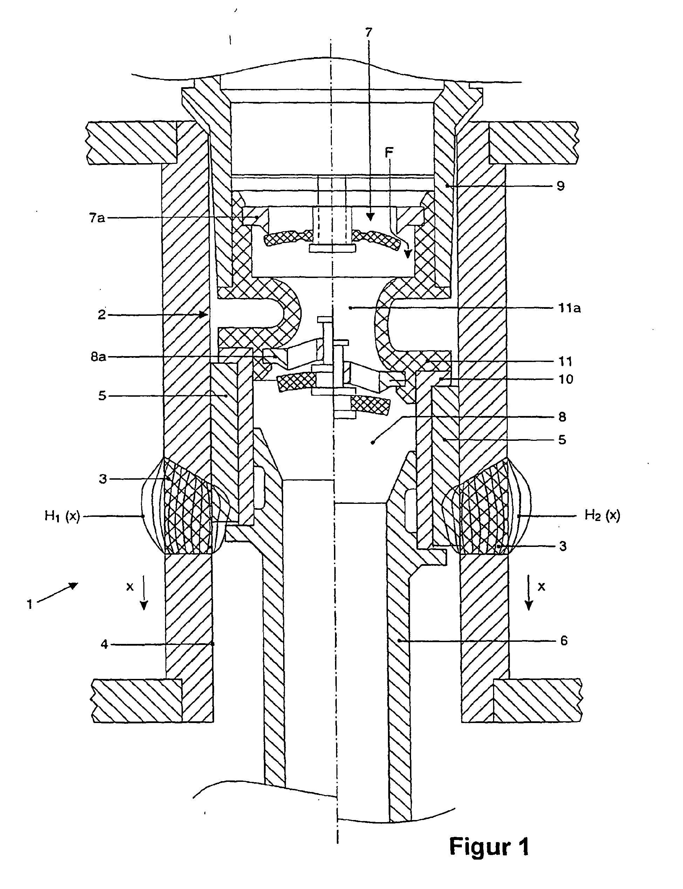

Die Dosiervorrichtung ist einer elektromagnetischen Betätigungseinrichtung 1 zugeordnet, wie sie in Figur 1 angedeutet ist. Diese weist einen mit nicht magnetischem Material gefüllten "Luftspalt" 3 auf. In einer zentralen Öffnung 4 der Betätigungseinrichtung 1 ist die Dosiervorrichtung 2 angeordnet, die hier aus einem zweiteiligen Gehäuse 9, 10 besteht. Die beiden Gehäuseteile sind über einen kräftigen Balg 11 aus elastomerem Material unter radialer Begrenzung der Pumpkammer 11a miteinander verbunden. Der Balg 11 bildet zugleich eine kräftige Rückstellfeder für die Pumpe.

Die Pumpkammer 11a wird axial durch ein Einlaß-Rückschlagventil 7 einerseits und ein Auslaß-Rückschlagventil 8 andererseits begrenzt, die jeweils einen Ventilträger 8a, 7a aufweisen.

Der Hubweg (in Hubrichtung x) der Pumpe ist durch in Figur 1 nicht näher dargestellte Anschläge genau begrenzt. Das Einlaßventil 7 ist in dem rohrförmigen Gehäuseteil 9 axial unbeweglich gehalten, während der Sitz oder der Träger 8a des Auslaßventils 8 direkt mit einem außenliegenden Anker 5 gekuppelt ist, der mit dem unteren rohrförmigen Gehäuseteil 10 verbunden ist. Das Auslaufventil 8 wird durch die axiale Bewegung seines Trägers 8a zwangsgesteuert.

Der Anker 5 ist in Förderrichtung der Pump- und Dosiervorrichtung 2 hinter der Pumpkammer 11a an besonders günstiger Stelle des Magnetfeldes H₁(x) des Luftspaltes 3 der Betätigungseinrichtung angeordnet. Durch die Anordnung des Ankers 5 außerhalb des Dosiergehäuses, insbesondere unterhalb der Pumpkammer 11a kann die Pumpkammer gegenüber der Betätigungseinrichtung 1 weiter nach oben gerückt werden, so daß sie in dem Bereich zu liegen kommt, der normalerweise der Wirkung der Kühlung des Produktes in dem nicht dargestellten Produktvorratsbehälter ausgesetzt ist.

Der Axial-Schnitt in **Figur 1** zeigt linksseitig ein Kraftfeld H₁(x) der inhomogen aus dem Spalt 3 ("Luftspalt" oder mit Kunststoff gefüllter Spalt) tretenden Feldlinien, wenn der Strom des Elektromagneten gerade eingeschaltet worden ist; rechts ist der Fall gezeigt, nachdem der Magnet 1 den Anker 5 angezogen hat, wobei eine Vielzahl der Feldlinien H₂(x) durch den ferromagnetischen Anker verlaufen und - ohne deutlichen radialen Luftspalt - stärkere Zugkräfte übertragen.

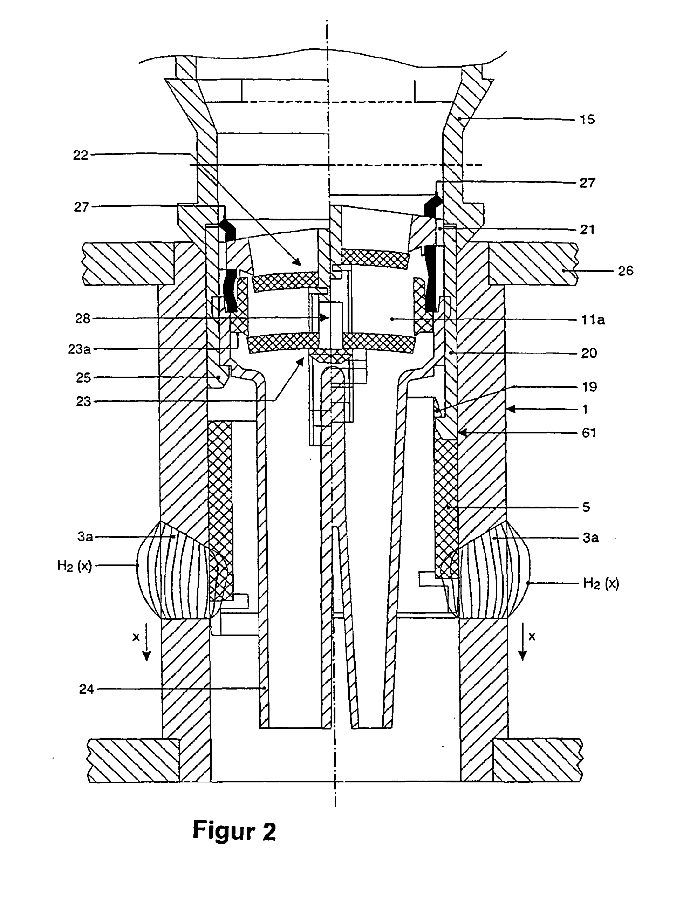

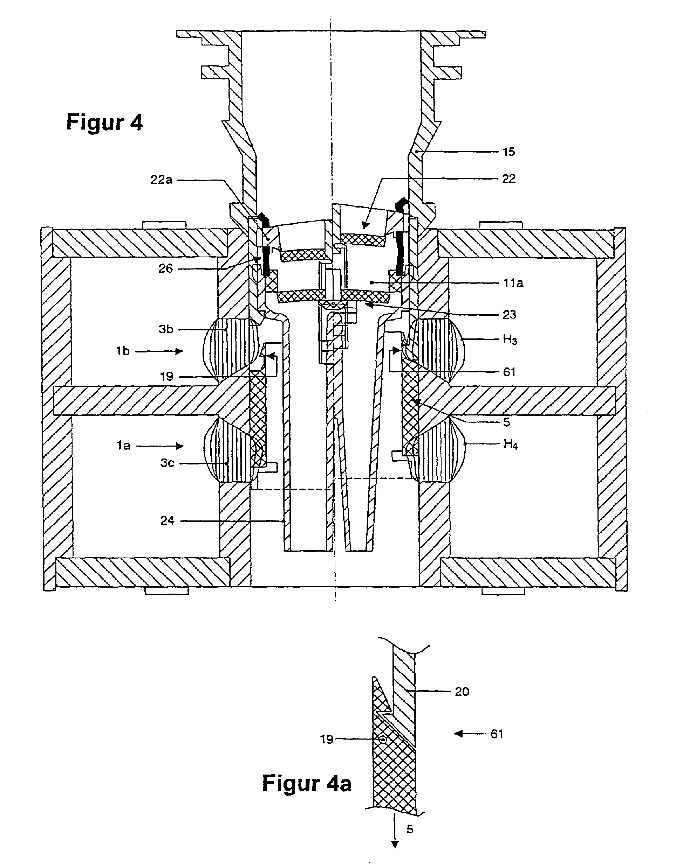

H₁(x) und H₂(x) sind hier abhängig von der axial veränderten Stellung des Ankers 5 dargestellt, genauer ist der Axialhub auch an der linken Hälfte der **Figur 2** **oder** **Figur 4** erkennbar.

Zur Begrenzung der Hubbewegung kann eine übliche Grenzlagen-Vorrichtung dienen.

**Bei** **Figur 2** **oder** **Figur 4** ist der mit dem Konzentratbehälter verbindbare Teil der Dosiervorrichtung mit 15 bezeichnet. Im Axialschnitt ist linksseitig der angezogene Anker (Förderhub) und rechtsseitig der "abgefallene" Anker 5 (bei Beginn des Förderhubs) dargestellt.

Von der Betätigungseinrichtung ist nur der zentrale Teil 1 angedeutet, in dem der (Luft)spalt 3a liegt. In diesem Bereich der Öffnung der Betätigungseinrichtung ist der außenliegende Anker 5 radial geführt, der über Kraftübertragungselemente 20 und eine schnappartige Kupplungseinrichtung 19 direkt mechanisch mit dem Träger 22a des Einlaß-Rückschlagventils 22 zu einer Bewegungseinheit verbunden ist. Der Träger 22a des Einlaßventils 22 weist eine Lippendichtung 27 zur Abdichtung in dem Gehäuse-Verbindungsabschnitt 15 auf. Die mechanischen Kraftübertragungselemente 20 gehen von dem Tragteil 22a mit den Radial-Verbindungsabschnitten 21 aus. Die Rastverbindung 19, 20, 61 ist in **Figur 4a** verdeutlicht.

Das Rückschlag-Auslaßventil ist mit 23 bezeichnet. Die beiden Ventile 22, 23 können eine den Hub begrenzende Einrichtung aufweisen (Anschläge an Ventilträger oder Gehäuse).

Während sich bei dem Ausführungsbeispiel **nach** **Figur 1** der FluidAuslaß 6 mitbewegt, ist bei dem Ausführungsbeispiel **nach** **Figur 2** der Auslaß 24 mit dem Auslaßventil 23 über Schnappelemente 25 unverschieblich in dem zentralen Teil 1a gehalten. Die Träger 22a, 23a der beiden Ventile 22, 23 sind über eine formelastische (elastomere) Manschette 26 dicht miteinander verbunden, die im dargestellten Beispiel zugleich als Rückstellglied der Pumpe 22, 11a, 23 ausgebildet sind.

Die unterschiedliche Ausbildung ist in dem Angriffspunkt der mechanischen Pumpkraft begründet. Während bei Figur 1 der Anker 5 am unteren Ventilträger 8a (über Gehäuseabschnitt 10) angreift, ist in Figur 2 die Kraft des Ankers 5 über Kopplungsglieder 20, 21 auf den oberen Ventilträger 22a gekoppelt; das axiale Glied 20 führt außen an der Pumpkammer 11a vorbei, das radiale Glied 21 greift in sie ein.

Greift die Kraft am unteren Ventil der Pumpkammer an, so kann der gesamte Auslauf 24 (in Figur 1 mit 6 bezeichnet) mitbewegt werden. Im Gegensatz dazu bleibt der Auslauf 24 stationär, wenn der Antrieb der Pumpe oben eingekoppelt wird. Dann werden geringere Massen bewegt, woraus sich eine höhere maximale Pumpfrequenz ergibt. Auch kann vermieden werden, daß sich Anschlußbuchsen oder Schläuche von Auslaß 24 durch die periodische Hubbewegung lösen.

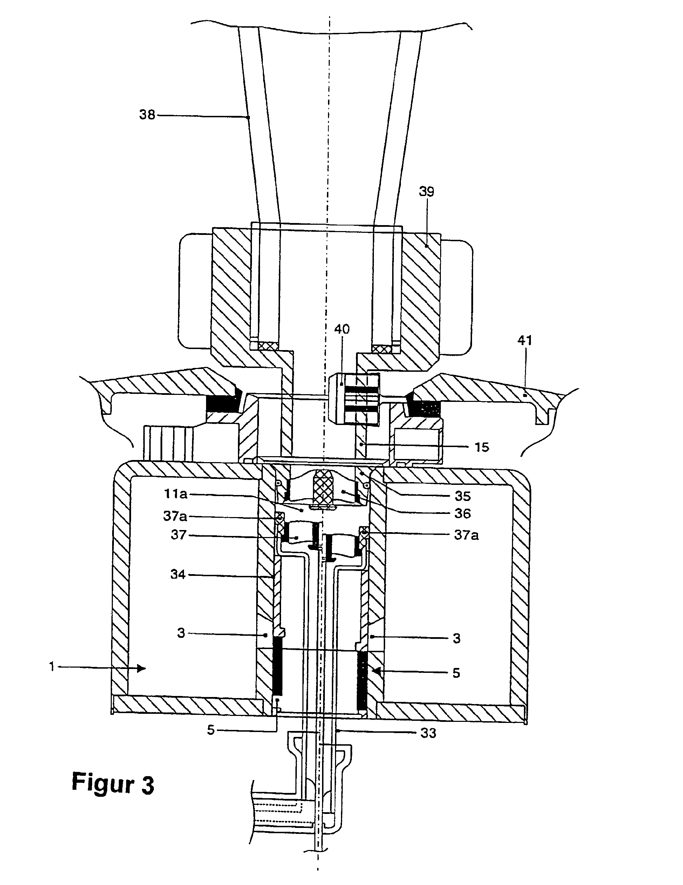

**Bei** **Figur 3** ist ein Vorratsbehälter 38 in Form einer Flasche mit der Dosiervorrichtung über Schraubkappe 39 abdichtend verbunden. Zur Belüftung dient das Belüftungsventil 40, über das auch CO₂ zur Belüftung eingeführt werden kann. Der untere Teil 15 der Schraubkappe bildet den oberen Teil des Dosiergehäuses, der in die elektromagnetische Betätigungseinrichtung 1 unter Zwischenschaltung einer Dichtung 35 eingreift und am unteren Ende das Einlaßventil 36 hält.

Das Auslaßventil 37 ist über Lippendichtung 37a abgedichtet und verschiebbar, gegebenenfalls in einer Einsatzbuchse - in der Öffnung der Betätigungseinrichtung 1 - geführt. Das Ventil 37 steht über ein Kraftübertragungsglied 34 mit dem Anker 5 in Verbindung, der außerhalb des durch den Auslaufteil 33 ergänzten Dosiergehäuses an günstiger Stelle (nahe) des Luftspaltes 3 angeordnet ist. Zur Rückstellung dient eine übliche Federeinrichtung z.B. der elastomere Balg selbst.

Mit 41 ist das Gestell z. B. eines Getränkeautomaten gezeigt, in dem die Teile angeordnet sind.

In Figur 3 bewegt sich wie in Figur 1 das untere Ventil 37 zusammen mit dem Auslaufrohr 33 beim Förderhub.

**Figur 4** ist eine Doppelspule, bei der zwei ggf. mit einem nicht magnetisierbaren Füllmaterial (wie Kunststoff) gefüllte "Luftspalte" 1b, 1a in Hubrichtung x des Ankers 5 hintereinander angeordnet sind. Entsprechende magnetische Wicklungen erlauben es, jeden Luftspalt individuell und unabhängig von den anderen mit magnetischen Kraftlinien H₃(x) bzw. H₄(x) zu versehen, die auf dem Anker 5 in entgegengesetzte Richtungen einwirken.

Im gezeigten Beispiel der Figur 4 wird ein Erregen des Feldes H₃, entsprechend einem Austreten von inhomogenen Feldlinien aus dem Luftspalt 1b, zu einem Anheben des Ankers 5 in eine Stellung führen, die in der rechten Hälfte des Bildes gezeigt ist. In dieser Stellung ist die Hubkraft über das hülsen- oder armförmige Kopplungsglied 20 auf das obere Ventil 22 bzw. dessen Ventilträger 22a übertragen, so daß die Pumpkammer 11a in der Ansaugstellung steht, in der Konzentrat von oben durch den Einfüllstutzen 15 in die Pumpkammer angesaugt wird.

Wird dagegen das Feld H₄ erregt, so tritt inhomogenes magnetisches Kraftfeld aus dem Luftspalt 3c aus, welches den Anker 5 nach abwärts verschiebt, um den oben liegenden Ventilträger 22a wieder abwärts zu bewegen, den Balgen 26 zu komprimieren und den Inhalt der Pumpkammer 11a durch das unten liegende Ventil 23 mit seinen elastischen Ventilklappen zu öffnen und das Konzentrat durch den Auslauf 24 auslaufen zu lassen.

Danach wird wiederum das Feld H₃ eingeschaltet, um den Anker 5 nach aufwärts zu bewegen, den Balgen 26 zu expandieren und Konzentrat durch das Ventil 22 in die Pumpkammer 11a zu leiten.

Dieser Zyklus wiederholt sich mit einer hohen Frequenz, die in der Größenordnung zwischen 50 Hz und 60 Hz liegt.

Der zuvor beschriebene Zyklus muß nicht unabhängig und losgelöst mit seinen beiden Magnetfeldern H₃ und H₄ verlaufen. Der zeitliche Verlauf dieser Magnetfelder kann überlagert sein, er kann in seiner Amplitude so abgestimmt sein, daß ein optimales Verhalten des die Hubbewegung ausführenden Ventils 22 bei einer gegebenen Viskosität des zu dosierenden Fluids erreicht wird. Als Möglichkeiten bieten sich dabei die folgenden an:
(a) Ohne größere Feder-Rückstellkräfte kann jeweils das Magnetfeld, das nicht für die aktuelle Hubbewegung verantwortlich ist, bremsend auf den Anker 5 einwirken und damit einen sanften Endanschlag erzielen.
(b) Auch ohne zusätzliche Federkraft kann der Beginn einer Hubbewegung durch das eigentlich nicht aktive Magnetfeld abgebremst werden, um einen sanften Hubbeginn zu erhalten.
(c) Beide Magnetfelder H₃ und H₄ können dauerhaft in Eingriff sein, jeweils nur mit unterschiedlicher Amplitude, um die Richtung des Hubs des Ankers 5 und damit des Ventils 22 zu bestimmen.

Der Verlauf und die Amplitude der Ströme in den Elektromagenten, die die Kraftfelder H₃ und H₄ erzeugen, kann in Kennlinienfeldern abgespeichert sein, abhängig von bestimmten Viskositäts-Bereichen des zu dosierenden Produkts. Die Alterung und Abnutzung des die Hubbewegung beschreibenden Ankers 5 oder seiner Lagerung kann kompensiert werden, die Reproduzierbarkeit der dosierten Menge bleibt langfristig gegeben.

Der bislang zwei wichtige Eigenschaften repräsentierende Balg 26 (die radiale Steifigkeit und die axiale Elastizität) ist nicht mehr kritisch, die Federspannung kann weitgehendst durch die gegensinnige Wirkung des jeweils nicht hauptsächlich aktiven Magnetfeldes ersetzt werden, sie kann sogar eingestellt werden, abhängig vom dosierten Fluid.

Selbst Temperaturen werden kompensierbar, wenn ein entsprechender Temperatursensor der Steuerung mitteilt, wie die Stromkurven und die gegenseitige zeitliche Überlappung der Kraftfelder H₃(x) und H₄(x) gewählt werden soll.

Herausvergrößert ist in **Figur 4a** die Schnapp- oder Rastverbindung 61, die sich identisch in den Figuren 1, 2 und 4 wiederfindet. Mit ihr wird der Anker 5 an einer oben liegenden Zunge 19 lösbar mit dem unteren Rasthaken 20 des mechanischen Kopplungsgliedes verbunden, das aufwärts und an der Pumpkammer und dem Dosiergehäuse außenliegend vorbei zu dem beweglichen Ventil geführt wird, auf das er mit einem nach radial einwärts gerichteten Steg oder Finger 21 einkoppelt.

Das technische Gebiet der Erfindung ist eine elektromagnetisch betätigbare und steuerbare Dosiervorrichtung für die volumengenaue Dosierung von Fluiden verschiedener Viskosität (sog. Konzentraten) zur Herstellung von Mischgetränken. Aufgabe der Erfindung ist es, die Leistung und Einsatzmöglichkeiten der Dosiervorrichtung zu erweitern und gleichwohl weiterhin eine volumengenaue Dosierung zu ermöglichen. Das wird erreicht, wenn das Ankerelement (5) außerhalb des Dosiergehäuses (9,10) beweglich angeordnet und mit dem beweglichen Rückschlagventil (8) mechanisch zu einer Bewegungseinheit gekoppelt ist. Werden zwei Anker oder zwei individuell steuerbare Elektromagnete verwendet (mit zwei Luftspalten), so kann der Hub des oder der Ankers (5) genauer beeinflußt werden.

## Patentansprüche

1. Elektromagnetisch betätigbare Pump- und Dosiervorrichtung für die volumengenaue Dosierung von Fluiden verschiedener Viskosität mit einem zweiteiligen, in Axialrichtung - die gleichzeitig die Durchströmrichtung vorgibt - langgestreckten, den Zu-(9) und Abfluss (10) einer dazwischen angeordneten Pumpkammer (11a) bildenden Dosiergehäuse (9,10), wobei die Pumpkammer (11a) in der Durchströmrichtung zwischen einem Einlass- und einem Auslass-Rückschlagventil (7, 8; 22, 23; 36, 37) begrenzt ist, von denen das eine in Axialrichtung unbeweglich angeordnet ist und das andere demgegenüber mittels eines von der elektromagnetischen Betätigungseinrichtung (1, 1a, 1b) axial verstellbaren Ankers (5) beweglich ist, wobei der Anker (5) mit dem beweglichen Rückschlagventil (8; 22; 37) mechanisch zu einer Bewegungseinheit gekoppelt (19;20;21;34;61) ist und der Anker (5) von einem aus mindestens einem nicht magnetisierbaren Luftspalt (3,3a,3b,3c) der Betätigungseinrichtung heraus inhomogen gebildeten Kraftfeld (H₁(x), H₂(x), H₃(x), H₄(x) in seiner Lage beeinflusst wird; **dadurch gekennzeichnet, dass** der Anker (5) außerhalb des Dosiergehäuses (9,10) angeordnet ist, ohne dass der Anker (5) die Fluide berührt, so dass der Anker radial an den Luftspalt (3, 3a, 3b, 3c) angrenzt.

2. Elektromagnetisch betätigbare Pump- und Dosiervorrichtung nach Anspruch 1, **dadurch gekennzeichnet, dass** der Anker (5) in Durchströmrichtung hinter der Pumpkammer (11a) angeordnet ist.

3. Elektromagnetisch betätigbare Pump- und Dosiervorrichtung nach Anspruch 1 oder 2, **dadurch gekennzeichnet, dass** zwei elektrisch ansteuerbare Spulen (1b,1c) die elektromagnetische Betätigungseinrichtung bilden, wobei die zwei Spulen in Verstellrichtung (x) des Ankers (5) hintereinander angeordnet sind, so dass der Anker (5) in die eine Richtung von der einen (1b) und in die andere Richtung von der anderen Spule (1c) verlagerbar ist.

4. Elektromagnetisch betätigbare Pump- und Dosiervorrichtung nach einem der erwähnten Ansprüche, von der Pump- und Dosiervorrichtung ganz oder teilweise zur Einweg-Verwendung einem Produkt-Vorratsbehälter (15,38) zugeordnet ist, **dadurch gekennzeichnet, dass** den Anker Lösbar mit der Pump- und Dosiervorrichtung verbunden ist wobei wenigstens der Anker (5) von dem Produkt-Vorratsbehälter unabhängig und - zur Mehrfachverwendung - der oder den elektromagnetischen Betätigungseinrichtung(en) (1,1a,1b) zugeordnet ist.

5. Elektromagnetisch betätigbare Pump- und Dosiervorrichtung nach einem der erwähnten Ansprüche, **dadurch gekennzeichnet, dass** der Anker (5) über eine Rastverbindung (19,20;61) leicht lösbar mit den Ventilträger (8a;22a) des beweglichen Ventils(8,22,37) oder mit einem mit diesem mitbewegten Abschnitt des Dosiergehäuses kuppelbar ist.

6. Elektromagnetisch betätigbare Pump- und Dosiervorrichtung nach einem der erwähnten Ansprüche, bei der die magnetische Betätigungseinrichtung (1,1a,1b,1c) eine U-Gestalt hat.

7. Elektromagnetisch betätigbare Pump- und Dosiervorrichtung nach einem der erwähnten Ansprüche, **dadurch gekennzeichnet, dass** die Vorrichtung weiter einen Auslass (6) umfasst, wobei der Anker (5) zusammen mit dem Auslass (6) mit den übrigen Teilen der Dosiervorrichtung leicht lösbar (61) verbunden ist.

8. Elektromagnetisch betätigbare Pump- und Dosiervorrichtung nach einem der erwähnten Ansprüche 1-6, **dadurch gekennzeichnet, dass** die Vorrichtung weiter einen Auslass (6) und ein Auslass-Rückschlagventil (8,8a) umfasst, wobei der Anker (5) zusammen mit dem Auslass (6) vorzugsweise zusammen mit dem Auslass-Rückschlagventil (8,8a) mit den übrigen Teilen der Dosiervorrichtung leicht lösbar (61) verbunden ist.

9. Elektromagnetisch betätigbare Pump- und Dosiervorrichtung nach einem der erwähnten Ansprüche 1-3 **dadurch gekennzeichnet,**
(a) **dass** der Anker (5) direkt mit dem Tragteil (10) des beweglichen Auslaß-Rückschlagventils (8) form- oder kraftschlüssig verbunden ist; oder
(b) **dass** der Tragteil (22a) des Einlass-Rückschlagventils (22) im Dosiergehäuse (15,16) unter Abdichtung (27) beweglich geführt ist und über wenigstens ein an der Pumpkammer (11a) außen vorbeigeführtes Bewegungs-Übertragungselement (20) lösbar, insbesondere über eine Schnapp- oder Bajonettverbindung (19), mit dem Anker (5) verbunden ist.

10. Verfahren zum genau dosierten Fördern oder Pumpen von viskosen Fluiden unter hohem Druck, oberhalb von 0,5 Bar (Überdruck), bei dem ein vom Spalt (3a,3b,3c) eines ansteuerbaren Elektromagnets (1;1a) ausgehendes Kraftfeld (H₁, H₂, H₃, H₄) auf mindestens einen dem Spalt (3) angrenzend zugeordneten axialverschieblich gelagerten Anker (5) übertragen wird, der seine Bewegung über eine mechanische Kopplung (19,20,21;34;10) in eine Pumpkammer (11a) überträgt, ohne dass der Anker (5) die viskosen Fluide berührt, aus der Fördervolumen und Förderdruck zyklisch aufgebaut werden.

11. Verfahren nach Anspruch 10, bei dem zwei magnetische Kraftfelder (H₃, H₄), aus zwei Luftspalten (3b,3c) heraus die Bewegung oder den Stellhub eines Ankers (5) gegensinnig beeinflussen, insbesondere nacheinander oder zeitlich teilüberlappend auf ihn einwirken.

12. Verfahren nach Anspruch 11, bei dem die Kraftfelder (H₁, H₂, H₃, H₄) in ihrem relativen Zeitverlauf oder/und ihrer Amplitude abhängig von den Eigenschaften des Dosierfluids veränderbar sind bzw. unterschiedlich sind.

13. Verfahren nach einem der Ansprüche 10-12, bei dem je einer von zwei über ein bewegliches Ventil mechanisch gekoppelten Ankern (5) individuell aus einem von zwei Luftspalten (3b,3c) magnetisch bewegungsbeeinflusst werden.

## Claims

1. An electromagnetically operable pumping and dosing device for volumetrically precise dosage of fluids of different viscosities, comprising a two-part dosing housing (9,10) being elongate in the axial direction - which also determines the flow passage direction - and forming the flow inlet (9) and the flow outlet (10) of a pumping chamber (11a) arranged therebetween, the pumping chamber (11a) being delimited in the flow passage direction between an inlet back-check valve and an outlet back-check valve (7,8;22,23;36,37), one of said valves being immobile in the axial direction and the other being movable relative thereto by an armature (5) which is axially displaceable by the electromagnetic operating means (1,1a,1b), said armature (5) being mechanically coupled with said movable back-check valve (8;22;37) to form one movable unit (19;20;21;34;61) therewith, and the armature (5) being influenced in its position by a force field (H₁(x), H₂(X), H₃(x), H₄(x)) formed inhomogeneously from out of at least one non-magnetizable air gap (3,3a,3b,3c) of the operating means; **characterized in that** the armature (5) is arranged outside the dosing housing (9,10) without the armature (5) contacting the fluids, so that the armature is arranged radially adjacent to said air gap (3,3a,3b,3c).

2. The electromagnetically operable pumping and dosing device according to claim 1, **characterized in that** the armature (5) is arranged downstream of the pumping chamber (11a) when seen in the flow passage direction.

3. The electromagnetically operable pumping and dosing device according to claim 1 or 2, **characterized in that** said electromagnetic operating means is formed by electromagnetically controllable coils (1b,1c), said two coils being serially arranged in the displacement direction (x) of the armature (5) so that the armature (5) is displaceable into one direction by one coil (1b) and into the other direction by the other coil (1c).

4. The electromagnetically operable pumping and dosing device according to any one of the above mentioned claims, which pumping and dosing device is, for single use, fully or partially associated to a product supply container (15,38), **characterized in that** the armature is releasably connected to the pumping and dosing device, wherein at least the armature (5) is independent of the product supply container and - for multiple use - is associated with the one or several electromagnetic control means (1,1b,1c).

5. The electromagnetically operable pumping and dosing device according to any one of the above mentioned claims, **characterized in that**, via a locking connection (19,20;61), the armature (5) is adapted to be coupled, in an easily releasable manner, to the valve carrier (8a;22a) of the movable valve (8,22,37) or to a portion of the dosing housing which is moved along with the valve.

6. The electromagnetically operable pumping and dosing device according to any one of the above mentioned claims, wherein the magnetic control means (1,1a,1b,1c) has a U-shape.

7. The electromagnetically operable pumping and dosing device according to any one of the above mentioned claims, **characterized in that** the device further comprises an outlet (6), the armature (5) together with said outlet (6) being connected (61), in an easily releasable manner, to the other component parts of the dosing device.

8. The electromagnetically operable pumping and dosing device according
to any one of the above mentioned claims 1-6, **characterized in that** the device further comprises an outlet (6) and an outlet back-check valve (8,8a), the armature (5) together with said outlet (6), preferably together with said outlet back-check valve (8,8a), being connected (61) in an easily releasable manner to the other component parts of the dosing device.

9. The electromagnetically operable pumping and dosing device according to any one of the above mentioned claims 1-3, **characterized in**
(a) **that** the armature (5) is directly connected, in a form- or force-locking manner, to the support portion (10) of the movable outlet back-check valve (8); or
(b) **that** the support portion (22a) of the inlet back-check valve (22) is movably guided, while sealed (27), in the dosing housing (15, 16) and, via at least one movement transfer element (20) guided externally past the pumping chamber (11a), is releasably connected to the armature (5), particularly via a snap- or bayonet-type connection (19).

10. A method for the precisely dosed conveying or pumping of viscous fluids at high pressure above 0.5 bar (overpressure), wherein a force field (H₁,H₂,H₃,H₄) issuing from the gap (3a,3b,3c) of a controllable solenoid (1;1a) is transmitted to at least one axially displaceable armature (5) associated to said gap (3) while arranged adjacent thereto, said armature transferring its movement via a mechanical coupling (19,20,21;34;10) into a pumping chamber (11a) without the armature (5) contacting the viscous fluids by which the conveying volume and the conveying pressure are cyclically generated.

11. The method according to claim 10, wherein two magnetic force fields (H₃,H₄) from out of two air gaps (3b,3c) influence the movement or the actuating stroke of an armature (5) in opposite senses, particularly acting on said armature sequentially or with partial temporal overlap.

12. The method according to claim 11, wherein the force fields (H₁,H₂,H₃, H₄) with regard to their relative development over time and/or their amplitude are changeable in dependence on the properties of the dosing fluid and are different, respectively.

13. The method according to any one of claims 10-12, wherein, from out of one of two air gaps (3b,3c), the movement of a respective one of the two armatures (5) which are mechanically coupled to each other via a movable valve, is individually magnetically influenced.

## Revendications

1. Dispositif de pompage et de dosage actionnable par voie électromagnétique, pour le dosage volumétriquement précis de fluides de différentes viscosités avec un boîtier de dosage (9, 10) réalisé en deux parties, allongé en direction axiale - prédéterminant simultanément la direction de passage d'écoulement - formant l'alimentation (9) et l'échappement (10) d'une chambre de pompage (11a) disposée en position intermédiaire, la chambre de pompage (11a) étant délimitée dans la direction de passage d'écoulement, entre un clapet anti-retour d'admission et un clapet anti-retour d'échappement (7, 8 ; 22, 23 ; 36, 37), dont l'un est disposé de manière immobile en direction axiale et l'autre est par contre mobile au moyen d'un induit (5) manoeuvrable axialement par le dispositif d'actionnement (1, 1a, 1b) électromagnétique, l'induit (5) étant couplé mécaniquement (19 ; 20 ; 21 ; 34 ; 61) au clapet anti-retour (8 ; 22 ; 37) mobile pour former un ensemble cinématique, et la position de l'induit (5) étant influencée par un champ de force (H₁(x), H₂(x), H₃(x), H₄(x)), formé de manière inhomogène à partir d'au moins un entrefer (3, 3a, 3b, 3c), non magnétisable, du dispositif d'actionnement, **caractérisé en ce que** l'induit (5) est disposé à l'extérieur du boîtier de dosage (9, 10), sans que l'induit (5) entre en contact avec le fluide, de manière que l'induit soit radialement limitrophe à l'entrefer (3, 3a, 3b, 3c).

2. Dispositif de pompage et de dosage actionnable par voie électromagnétique selon la revendication 1, **caractérisé en ce que** l'induit (5) est disposé derrière la chambre de pompage (11a), en observant dans la direction de passage de l'écoulement.

3. Dispositif de pompage et de dosage actionnable par voie électromagnétique selon la revendication 1 ou 2, **caractérisé en ce que** deux bobines (1b, 1c), susceptibles d'être commandées électriquement, forment le dispositif d'actionnement électromagnétique, les deux bobines étant disposées l'une derrière l'autre en observant dans la direction de manoeuvre (x) de l'induit (5), de manière que l'induit(5) soit déplaçable dans une premier direction par l'une (1b) et dans l'autre direction par l'autre bobine (1c).

4. Dispositif de pompage et de dosage actionnable par voie électromagnétique selon l'une des revendications mentionnées, associé à un réservoir de stockage de produit (15, 38) par le dispositif de pompage et de dosage, en totalité ou en partie pour une utilisation unique avec mise au rebut après usage, **caractérisé en ce que** l'induit est relié de manière désolidarisable au dispositif de pompage et de dosage et au moins l'induit (5), indépendamment du réservoir de stockage de produit, et - en vue d'une utilisation multiple - est associé aux un ou plusieurs dispositifs d'actionnement (1, 1a, 1b) électromagnétique(s).

5. Dispositif de pompage et de dosage actionnable par voie électromagnétique selon l'une des revendications mentionnées, **caractérisé en ce que** l'induit (5) est susceptible d'être accouplé, de manière aisément désolidarisable par l'intermédiaire d'une liaison à encliquetage (19, 20 ; 61), au support de clapet (8a ; 22a) du clapet mobile (8, 22, 37) ou à un tronçon, déplacé conjointement avec celui-ci, du boîtier de dosage.

6. Dispositif de pompage et de dosage actionnable par voie électromagnétique selon l'une des revendications mentionnées, dans lequel le dispositif d'actionnement (1, 1a, 1b, 1c) électromagnétique présente une forme en U.

7. Dispositif de pompage et de dosage actionnable par voie électromagnétique selon l'une des revendications mentionnées, **caractérisé en ce que** le dispositif comprend en outre un échappement (6), l'induit (5) étant relié (61), de manière aisément désolidarisable, conjointement avec l'échappement (6), aux autres parties du dispositif de dosage.

8. Dispositif de pompage et de dosage actionnable par voie électromagnétique selon l'une des revendications 1 à 6 mentionnées, **caractérisé en ce que** le dispositif comprend en outre un échappement (6) et un clapet anti-retour d'échappement (8, 8a), l'induit (5) étant relié (61), de manière aisément désolidarisable, conjointement avec l'échappement (6), de préférence conjointement avec le clapet anti-retour d'échappement (8, 8a), aux autres parties du dispositif de dosage.

9. Dispositif de pompage et de dosage actionnable par voie électromagnétique selon l'une des revendications 1 à 3 mentionnées, **caractérisé en ce que** :
(a) l'induit (5) est directement relié, par une liaison à ajustement de formes ou à interaction de forces, à la partie support (10) du clapet anti-retour d'échappement (8) mobile ; ou
(b) la partie support (22a) du clapet anti-retour d'admission (22) est guidé de manière déplaçable, avec une joint d'étanchéité (27), dans le boîtier de dosage (15, 16), et est relié à l'induit (5) de manière désolidarisable, par l'intermédiaire d'au moins un élément de transmission cinématique (20) déplacé, en particulier par l'intermédiaire d'une liaison à encliquetage ou à baïonnette (19).

10. Procédé de transvasement ou de pompage dosé de manière précise de fluides visqueux sous haute pression, supérieure à 0,5 bar (surpression), dans lequel un champ de force (H₁, H₂, H₃, H4), partant de l'entrefer (3a, 3b, 3c) d'un électroaimant (1 ; 1a) susceptible d'être commandé, est transmis à au moins un induit (5) monté de manière déplaçable axialement, associé de manière limitrophe à l'entrefer (3), l'induit transmettant son déplacement, par l'intermédiaire d'un accouplement mécanique (19, 20, 21 ; 34, 10) dans une chambre de pompage (11a), sans que l'induit entre en contact avec les fluides visqueux, chambre de pompage d'où des volumes de transvasement et une pression de transvasement sont établis cycliquement.

11. Procédé selon la revendication 10, dans lequel deux champs de force magnétique (H₃, H₄), provenant de deux entrefers (3b, 3c), influent en sens inverse sur le déplacement ou la course de réglage d'un induit (5), en particulier agissent sur l'induit l'un après l'autre ou avec un chevauchement temporel partiel.

12. Procédé selon la revendication 11, dans lequel les champs de force (H₁, H₂, H₃, H₄) sont modifiables et/ou sont différents quant à leur allure temporelle relative ou/et à leur amplitude, en fonction des propriétés du fluide à doser

13. Procédé selon l'une des revendications 10 à 12, dans lequel chaque fois l'un de deux induits (5), couplés mécaniquement par l'intermédiaire d'un clapet mobile, est influencé cinématiquement magnétiquement à partir d'un de deux entrefers (3b, 3c).
